(19) Europäisches Patentamt
European Patent Office
Office européen des brevets

(11) EP 3 430 071 B1

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **17710319.9**

(22) Anmeldetag: **16.03.2017**

(51) Int Cl.:
***C08G 64/34*** *(2006.01)* ***C08G 65/26*** *(2006.01)*

(86) Internationale Anmeldenummer:
**PCT/EP2017/056284**

(87) Internationale Veröffentlichungsnummer:
**WO 2017/158114 (21.09.2017 Gazette 2017/38)**

# (54) VERFAHREN ZUR HERSTELLUNG VON POLYETHERCARBONATPOLYOLEN

METHOD FOR MANUFACTURING POLYETHER CARBONATE POLYOLS

PROCEDE DE PRODUCTION DE POLYETHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 EP 16161040**

(43) Veröffentlichungstag der Anmeldung:
**23.01.2019 Patentblatt 2019/04**

(73) Patentinhaber: **Covestro Deutschland AG
51373 Leverkusen (DE)**

(72) Erfinder:
- **HOFMANN, Jörg
47800 Krefeld (DE)**
- **BRAUN, Stefanie
51069 Köln (DE)**
- **WOLF, Aurel
42489 Wülfrath (DE)**

(74) Vertreter: **Levpat
c/o Covestro AG
Gebäude 4825
51365 Leverkusen (DE)**

(56) Entgegenhaltungen:
**WO-A1-03/029325**
**WO-A1-2015/059068**
**US-A1- 2003 134 740**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 430 071 B1

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden an H-funktionelle Startersubstanzen in Gegenwart eines Doppelmetallcyanid (DMC)-Katalysators oder in Gegenwart eines Metallkomplex¬katalysators auf Basis der Metalle Zink und/oder Cobalt.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

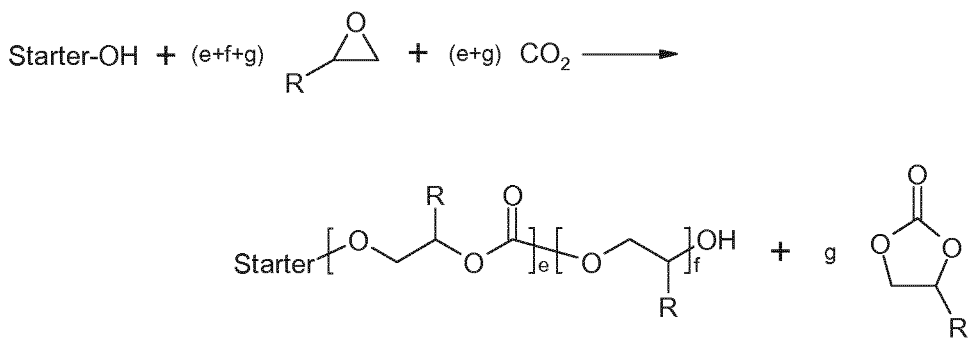

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der HomoPolymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/058913 offenbart ein Verfahren zur Herstellung von Polyurethan-Weichschaumstoffen mit einer verringerten Emission von organischen Stoffen, wobei die eingesetzten Polyethercarbonatpolyole am Kettenende einen Block aus reinen Alkylenoxideinheiten aufweisen.

EP-A 2 530 101 offenbart ein Verfahren zur Herstellung von Polyethercarbonatpolyolen, in denen mindestens ein Alkylenoxid und Kohlendioxid an eine H-funktionelle Startersubstanz in Gegenwart eines DMC-Katalysators reagieren. EP-A 2 530 101 offenbart aber nicht, wie Polyethercarbonatpolyole gegenüber thermischer Belastung stabilisiert werden können, so dass nach thermischer Belastung ein möglichst geringer Gehalt an cyclischem Carbonat erhalten wird.

US-A 4 145 525 offenbart ein Verfahren zur thermischen Stabilisierung von Polyalkylencarbonatpolyolen. Die in US-A 4 145 525 offenbarten Polyalkylencarbonatpolyole weisen alternierende Einheiten aus Alkylenoxid und Kohlendioxid auf. Gemäß der Lehre von US-A 4 145 525 wird zumindest ein Teil der endständigen Hydroxylgruppen des Polyalkylencarbonatpolyols mit einer gegenüber Hydroxyl-Gruppen reaktiven Phosphor-Verbindung umgesetzt unter

Bildung einer Sauerstoff-Phosphor-Verbindung. US-A 4 145 525 offenbart keine Polyethercarbonatpolyole. Aus US-A 4 145 525 erhält der Fachmann aber keine Lehre, wie Polyethercarbonatpolyole mit einem möglichst niedrigen Gehalt an cyclischem Carbonat nach thermischer Belastung hergestellt werden können.

US 2003/134740 A1 offenbart ein Verfahren zur Herstellung von Trägerkatalysatoren zur Copolymerisation von Kohlendioxid und Epoxiden, die der Herstellung von Poly(alkylencarbonaten) dienen, umfassend den Schritt der Aufbringung eines Zinkdicarboxylats auf Siliciumdioxid. Das Verfahren unterscheidet sich also zumindest in den eingesetzten Katalysatoren, und auch zum Einfluss der eingesetzten Qualität des Kohlendioxids kann der Fachmann nicht die erfindungsgemäße Lehre entnehmen.

WO 2015/059068 A1 offenbart ein Verfahren zur Herstellung von Polyethercarbonatpolyolen durch katalytische Copolymerisation von Kohlendioxid mit Alkylenoxiden in Gegenwart einer oder mehrerer H-funktioneller Startersubstanzen, wobei die vorteilhafte Verwendung bestimmter Qualitäten an Kohlendioxid aber nicht offenbart ist.

Da Propylencarbonat einen außerordentlich hohen Siedepunkt von 240 °C bei Normaldruck aufweist, ist dessen Abtrennung aus dem Reaktionsgemisch aufwendig und zeitintensiv. Es ist daher wünschenswert, ein Verfahren zur Copolymerisation von Epoxiden mit Kohlendioxid zu entwickeln, wobei möglichst geringe Mengen an cyclischem Carbonat (wie beispielsweise Propylencarbonat) gebildet werden. Es war daher Aufgabe der vorliegenden Erfindung, ein Verfahren bereitzustellen, mit dem Polyethercarbonatpolyole mit verbesserter Selektivität (d.h. möglichst niedriges Verhältnis von cyclischem Carbonat zu linearem Polyethercarbonatpolyol) hergestellt werden können. Darüber hinaus ist es Aufgabe einer bevorzugten Ausführungsform der Erfindung, dass auch nach thermischer Belastung des Polyethercarbonatpolyols dieses einen möglichst geringen Gehalt an cyclischem Carbonat aufweist.

Überraschenderweise wurde nun gefunden, dass ein Verfahren zur Herstellung von Polyethercarbonatpolyolen aus H-funktioneller Startersubstanz, Alkylenoxid und Kohlendioxid in Gegenwart eines DMC-Katalysators oder in Gegenwart eines Metallkomplex¬katalysators auf Basis der Metalle Zink und/oder Cobalt, wobei das eingesetzte Kohlendioxid eine Reinheit von 99,5000 bis 99,9449 Vol.-%, bevorzugt von 99,9000 bis 99,9449 Vol.-% aufweist, die oben genannte Aufgabe löst.

In einer bevorzugten Ausführungsform betrifft die Erfindung ein Verfahren zur Herstellung von Polyethercarbonatpolyolen aus H-funktioneller Startersubstanz, Alkylenoxid und Kohlendioxid in Gegenwart eines DMC-Katalysators oder in Gegenwart eines Metallkomplex¬katalysators auf Basis der Metalle Zink und/oder Cobalt, wobei das eingesetzte Kohlendioxid eine Reinheit von 99,5000 bis 99,9449 Vol.-%, bevorzugt von 99,9000 bis 99,9449 Vol.-% aufweist, und wobei

(α) gegebenenfalls eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator vorgelegt wird ("Trocknung"),

(β) gegebenenfalls zu dem Gemisch aus Schritt (α) eine Teilmenge an Alkylenoxid bei Temperaturen von 90 bis 150°C zugegeben wird, und wobei dann die Zugabe des Alkylenoxids unterbrochen wird ("Aktivierung"),

(γ) Alkylenoxid und Kohlendioxid an eine H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird ("Copolymerisation"),

(δ) gegebenenfalls das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird.

Das im erfindungsgemäßen Verfahren eingesetzte Kohlendioxid enthält beispielsweise Komponenten wie Wasser, Ammoniak, Sauerstoff, Stickoxide (NO, $NO_2$), Kohlenwasserstoffe (Benzol, Toluol, Xylol) Acetaldehyd, Kohlenmonoxid, Methanol, Schwefeldioxid, Schwefelwasserstoff und/oder Mercaptane. Die Art und Menge der im Kohlendioxid enthaltenen Komponenten ist abhängig von Herstellverfahren des Kohlendioxids. Überraschenderweise wurde gefunden, dass bei dem erfindungsgemäßen Verfahren zur Herstellung von Polyethercarbonatpolyolen eine verbesserte Selektivität (d.h. möglichst niedriges Verhältnis von cyclischem Carbonat zu linearem Polyethercarbonatpolyol) erreicht wird, wenn Kohlendioxid einer geringeren Reinheit eingesetzt wird, also der Anteil insbesondere der vorgenannten Komponenten im Kohlendioxid so hoch ist, dass das eingesetzte Kohlendioxid eine Reinheit von 99,5000 bis 99,9449 Vol.-%, bevorzugt von 99,9000 bis 99,9449 Vol.-% aufweist. Eine Reinheit des Kohlendioxids von beispielsweise 99,9449 Vol.-% ist so zu verstehen, dass das eingesetzte Kohlendioxid zu 99,9449 Vol.-% aus Kohlendioxid besteht und zu 0,0551 Vol.-% aus Komponenten wie insbesondere Wasser, Ammoniak, Sauerstoff, Stickoxide (NO, $NO_2$), Kohlenwasserstoffe (Benzol, Toluol, Xylol) Acetaldehyd, Kohlenmonoxid, Methanol, Schwefeldioxid, Schwefelwasserstoff und/oder Mercaptane.

Charakteristisch für die erfindungsgemäß in Gegenwart eines Doppelmetallcyanid (DMC)-Katalysators hergestellten Polyethercarbonatpolyole ist, dass diese zwischen den Carbonatgruppen auch Ethergruppen enthalten. In Bezug

auf Formel (Ia) bedeutet dies, dass das Verhältnis von e/f bevorzugt von 2 : 1 bis 1 : 20, besonders bevorzugt von 1,5 : 1 bis 1 : 10 beträgt.

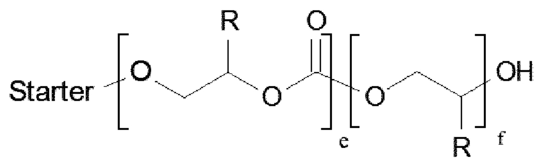

(Ia)

Zu Schritt ($\alpha$):

Das erfindungsgemäße Verfahren zur Herstellung von Polyethercarbonatpolyolen durch Anlagerung von Alkylenoxiden und Kohlendioxid an H-funktionelle Startersubstanz kann insbesondere dann den Schritt ($\alpha$) umfassen, wenn das Verfahren in Gegenwart eines Doppelmetall cyanid (DMC)-Katalysators durchgeführt wird.

Bei dem erfindungsgemäßen Verfahren kann zunächst H-funktionelle Startersubstanz und/oder ein Suspensionsmittel, das keine H-funktionellen Gruppen enthält, im Reaktor vorgelegt werden, vorzugsweise wird eine Teilmenge der H-funktionellen Startersubstanz vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie $\beta$-Propiolacton, $\beta$-Butyrolacton, $\beta$-Isovalerolacton, $\beta$-Caprolacton, $\beta$-Isocaprolacton, $\beta$-Methyl-$\beta$-valerolacton,

5-gliedrige Ringlactone, wie $\gamma$-Butyrolacton, $\gamma$-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,

6-gliedrige Ringlactone, wie $\delta$-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydioxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro--on,

7-gliedrige Ringlactone, wie $\varepsilon$-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,

höhergliedrige Ringlactone, wie (7*E*)-Oxacycloheptadec-7-en-2-on.

Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5 -dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid eingesetzt.

In einer Ausführungsform der Erfindung wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im nach Schritt (γ) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt (α) in das resultierende Gemisch (i) aus einer Teilmenge der H-funktionellen Startersubstanz und/oder Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt (α) das resultierende Gemisch (i) aus einer Teilmenge der H-funktionellen Startersubstanz(en) und/oder Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) eine Teilmenge der H-funktionellen Startersubstanz und/oder Suspensionsmittel vorgelegt und

(α-II) die Temperatur der Teilmenge der H-funktionellen Startersubstanz und/oder des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge der H-funktionellen Startersubstanz und/oder Suspensionsmittel in Schritt (α-I) oder unmittelbar anschließend in Schritt (α-II) zugesetzt wird, und
wobei das Suspensionsmittel keine H-funktionellen Gruppen enthält.

Zu Schritt (β):

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) wird bevorzugt unter einer Kohlendioxid-Atmosphäre durchgeführt. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben.

Zu Schritt (γ):

Die Dosierung des Kohlendioxids , des Alkylenoxids und gegebenenfalls auch der H-funktionellen Startersubstanz kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Hierbei ist zu berücksichtigen, dass in wenigsten einem der Schritte (α) und (γ) H-funktionelle Startersubstanz eingesetzt wird. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell (portionsweise) über jeweils separate Dosierungen (Zugaben) erfolgen oder über eine oder mehrere Dosierungen, wobei das Alkylenoxid bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck (absolut) (im Sinne der Erfindung ist der Gesamtdruck (absolut) definiert als die Summe der Partialdrücke des eingesetzten Alkylenoxids und Kohlendioxids) bei den jeweiligen Reaktionsbedingungen festgelegt werden. Als Gesamtdruck (absolut) hat sich der Bereich von 5 bis 120 bar, bevorzugt 10 bis 110 bar, besonders bevorzugt von 20 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der H-funktionellen Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierten DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierten DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren, wobei in Schritt (γ) H-funktionelle Startersubstanz, Alkylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyethercarbonatpolyole gemäß den Schlitten (α) und (β) eine aktivierte DMC-Katalysatorenthaltende Mischung hergestellt, dann werden gemäß Schritt (γ)

(γ1) jeweils eine Teilmenge an H-funktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktionelle Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben, wobei die Menge vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch überraschend gefunden worden, dass das Verfahren der vorliegenden Erfindung zur Herstellung großer Mengen des Polyethercarbonatpolyols verwendet werden kann, wobei anfänglich ein gemäß den Schritten (α) und (β) in einer Teilmenge der H-funktionellen Startersubstanz und/oder in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht-aktivierter DMC-Katalysator in fester Form oder in Form einer Aufschlämmung in H-funktioneller Startersubstanz oder in Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist

beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Zu Schritt (δ)

Gemäß dem optionalen Schritt (δ) kann das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen werden oder es kann kontinuierlich in einen Nachreaktor zur Nachreaktion überführt werden, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert.

Wenn das in Schritt (γ) erhaltene Reaktionsgemisch im Reaktor verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist.

Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders bevorzugt zwischen 10 min und 5 h.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird, und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $A1^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die

allgemeine Formel (VI)

$$(Y)_aM'(CN)_b(A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).
Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono -tert. -butylether und 3 -Methyl-3 -oxetan-methanol.
Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol),

Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 μm/min - 500 μm/min, bevorzugt im Bereich 50 μm/min - 150 μm/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein.

Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxy¬propyl¬trimethoxysilan, 3-(Gycidyloxy¬propyl¬triethoxysilan, 3-Glycidyloxypropyltripropoxysilan, 3 -Glycidyloxy-propyl-methyl-dimethoxysilan, 3 -Glycidyloxy¬propyl-ethyldiethoxysilan, 3-Glycidyloxy¬propyltriisopropoxysilan. Vorzugsweise werden als Alkylenoxide 1-Butenoxid, Ethylenoxid und/oder Propylenoxid, insbesondere Propylenoxid eingesetzt.

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, die ein Molekulargewicht Mn im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren

und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Komponente K

Als Komponente K geeignete Verbindungen sind dadurch gekennzeichnet, dass sie mindestens eine Phosphor-Sauerstoff-Wasserstoff-Gruppe enthalten. Vorzugsweise ist Komponente K ausgewählt aus mindestens einer Verbindung aus der Gruppe bestehend aus
Phosphorsäure,
Mono- und Dialkylester der Phosphorsäure,
Mono- und Diarylester der Phosphorsäure,
Mono- und Dialkarylester der Phosphorsäure,
(NH4)2HPO4,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure, und
Phosphinsäure.

Die Mono- oder Dialkylester von Phosphorsäure sind vorzugsweise die Mono- oder Dialkylester von ortho-Phosphorsäure, Mono, Di- oder Trialkylester von Pyrophosphorsäure und Mono-, Di-, Tri-, Tetra- oder Polyalkylester von Polyphosphorsäure, besonders bevorzugt die jeweiligen Ester mit Alkoholen mit 1 bis 30 C-Atomen. Die Mono- oder Diarylester von Phosphorsäure sind vorzugsweise die Mono- oder Diarylester von ortho-Phosphorsäure, Mono, Di- oder Triarylester von Pyrophosphorsäure und Mono-, Di-, Tri-, Tetra- oder Polyarylester von Polyphosphorsäure, besonders bevorzugt die jeweiligen Ester mit Alkoholen mit 6 oder 10 C-Atomen. Die Mono- oder Dialkarylester von Phosphorsäure sind vorzugsweise die Mono- oder Dialkarylester von ortho-Phosphorsäure, Mono, Di- oder Trialkarylester von Pyrophosphorsäure und Mono-, Di-, Tri-, Tetra- oder Polyalkarylester von Polyphosphorsäure, besonders bevorzugt die jeweiligen Ester mit Alkoholen mit 7 bis 30 C-Atomen. Als Komponente K sind beispielsweise die folgenden Verbindungen geeignet: Phosphorsäurediethylester, Phosphorsäuremono¬ethylester, Phosphorsäuredipropylester, Phosphorsäuremono¬propylester, Phosphorsäuredibutylester, Phosphorsäuremonobutylester, Phosphorsäurediphenylester, Phosphorsäuredikresylester, Fructose-1,6-bisphosphat, Glucose-1-phosphat, Phosphorsäure-bis-(4-nitrophenyl)-ester, Phosphorsäuredibenzylester, Phosphorsäure-diethyl-3-butenylester, Phosphorsäure-dihexadecylester, Phosphorsäure-diphenylester und Phosphorsäure-2-hydroxyethylmethacrylatester.

Als Monoalkylester der Phosphonsäure werden bevorzugt die jeweiligen Ester mit Alkoholen mit 1 bis 30 C-Atomen eingesetzt. Als Monoarylester der Phosphonsäure werden bevorzugt die jeweiligen Ester mit Alkoholen mit 6 oder 10 C-Atomen eingesetzt. Als Monoalkarylester der Phosphonsäure werden bevorzugt die jeweiligen Ester mit Alkoholen mit 7 bis 30 C-Atomen eingesetzt.

Als Mono- und Dialkylester der Phosphorigen Säure werden bevorzugt die Ester mit Alkoholen mit 1 bis 30 C-Atomen eingesetzt. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure und Octadecylphosphonsäure. Als Mono- und Diarylester der Phosphorigen Säure werden bevorzugt die jeweiligen Ester mit Alkoholen mit 6 oder 10 C-Atomen eingesetzt. Als Mono- und Dialkarylester der Phosphorigen Säure werden bevorzugt die jeweiligen Ester mit Alkoholen mit 7 bis 30 C-Atomen eingesetzt.

Besonders bevorzugt ist Komponente K ausgewählt aus mindestens einer Verbindung aus der Gruppe bestehend aus Phosphorsäure, Phosphonsäure, und Phosphinsäure. Höchst bevorzugt ist Komponente K Phosphorsäure.

Die in der Beschreibung der Komponente K genannten Alkohole mit 1 bis 30 C-Atomen sind beispielsweise Methanol, Ethanol, Propanol, Butanol, Pentanol, Hexanol, Heptanol, Octanol, Nonanol, Dekanol, Dodekanol, Tridekanol, Tetradekanol, Pentadekanol, Hexa¬dekanol, Heptadekanol, Octadekanol, Nona¬dekanol, Methoxymethanol, Ethoxy¬methanol, Propoxymethanol, Butoxymethanol, 2-Ethoxyethanol, 2-Propoxyethanol, 2-Butoxy¬ethanol, Phenol, Hydroxyessig¬säure¬ethyl¬ester, Hydroxyessig¬säure¬propyl¬ester, Hydroxypropionsäureethylester, Hydroxy¬propion¬säurepropylester, 1,2-Ethan¬diol, 1,2-Propandiol, 1,2,3-Trihydroxypropan, 1,1,1-Tri-methylol¬propan oder Penta¬erythrit.

Des Weiteren sind als Komponente K geeignet Verbindungen des Phosphors, die durch Reaktion mit OH-funktionellen Verbindungen (wie bspw. Wasser) eine oder mehrere Phosphor-Sauerstoff-Wasserstoff-Gruppen ausbilden können. Beispielsweise kommen als solche Verbindungen des Phosphors in Frage Phosphor-(V)-sulfid, Phosphortribromid, Phosphortrichlorid und Phosphortriiodid.

Es können auch beliebige Mischungen der vorgenannten Verbindungen als Kom¬po¬nente K eingesetzt werden. Auch kann Kom¬po¬nente K in Mischung mit Suspensionsmittel oder in Mischung mit Phosphorsäuretrialkylester (insbesondere Phosphorsäuretriethylester) eingesetzt werden.

Komponente K kann in einem belieben Schritt des Verfahrens zudosiert werden. Vorteilhaft ist es, die Komponente K in Schritt ($\gamma$) zuzudosieren, insbesondere wenn in Schritt ($\gamma$) H-funktionelle Startersubstanz zudosiert wird. Vorteilhaft ist es auch, Komponente K in Schritt ($\delta$) dem Reaktionsgemisch im Nachreaktor zuzugegeben. Vorteilhaft ist es außerdem, die Komponente K erst nach der Nachreaktion (Schritt ($\delta$)) dem erhaltenen Reaktionsgemisch zuzugeben.

In einer möglichen Ausführungsform der Erfindung wird während der Nachreaktion (Schritt ($\delta$)) Komponente K in einer Menge von 5 ppm bis 1000 ppm, besonders bevorzugt 10 ppm bis 500 ppm, höchst bevorzugt 20 ppm bis 200 ppm, jeweils bezogen auf das in Schritt ($\gamma$) erhaltene Reaktionsgemisch, zugegeben. Die Komponente K wird während der Nachreaktion besonders bevorzugt bei einem Gehalt an freiem Alkylenoxid von 0,1 g/l bis 10 g/l, höchst bevorzugt von 1 g/l bis 10 g/l Alkylenoxid und besonders höchst bevorzugt von 5 g/l bis 10 g/l zugegeben. Bei der Durchführung des erfindungsgemäßen Verfahrens mit Verwendung eines Rohrreaktors zur Nachreaktion in Schritt ($\delta$) wird die Komponente K besonders bevorzugt in der zweiten Hälfte der Wegstrecke zudosiert, die das Reaktionsgemisch im Rohrreaktor durchläuft.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di-und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt.

Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden.

Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

In einer ersten Ausführungsform betrifft die Erfindung somit ein Verfahren zur Herstellung von Polyethercarbonatpolyolen aus H-funktioneller Startersubstanz, Alkylenoxid und Kohlendioxid in Gegenwart eines Doppelmetallcyanid (DMC)-Katalysators oder in Gegenwart eines Metallkomplex¬katalysators auf Basis der Metalle Zink und/oder Cobalt, wobei das eingesetzte Kohlendioxid eine Reinheit von 99,5000 bis 99,9449 Vol.-% aufweist.

In einer zweiten Ausführungsform betrifft die Erfindung ein Verfahren gemäß der ersten Ausführungsform,

wobei das eingesetzte Kohlendioxid eine Reinheit von 99,9000 bis 99,9449 Vol.-% aufweist.

In einer dritten Ausführungsform betrifft die Erfindung ein Verfahren gemäß der ersten oder zweiten Ausführungsform, welches in Gegenwart mindestens eines DMC-Katalysators durchgeführt wird.

In einer vierten Ausführungsform betrifft die Erfindung ein Verfahren gemäß einer der Ausführungsformen 1 bis 3, dadurch gekennzeichnet, dass das Verfahren in Gegenwart mindestens eines DMC-Katalysators durchgeführt wird und dass

(α) H-funktionelle Startersubstanz und/oder ein Suspensionsmittel, das keine H-funktionellen Gruppen enthält, vorgelegt und gegebenenfalls Wasser und/oder andere leicht flüchtige Verbindungen durch erhöhte Temperatur und/oder reduziertem Druck entfernt werden, wobei der DMC-Katalysator der H-funktionellen Startersubstanz oder dem Suspensionsmittel vor oder nach der Trocknung zugesetzt wird,

(β) zu dem Gemisch aus Schritt (α) eine Teilmenge an Alkylenoxid bei Temperaturen von 90 bis 150°C zugegeben wird, und wobei dann die Zugabe des Alkylenoxids unterbrochen wird,

(γ) Alkylenoxid und Kohlendioxid und gegebenenfalls H-funktionelle Startersubstanz zu der aus Schritt (β) resultierenden Mischung zugesetzt werden,

wobei in wenigsten einem der Schritte (α) und (γ) H-funktionelle Startersubstanz eingesetzt wird.

In einer fünften Ausführungsform betrifft die Erfindung ein Verfahren gemäß einer der Ausführungsformen 1 bis 4, dadurch gekennzeichnet, dass

(γ) H-funktionelle Startersubstanz(en), Alkylenoxid und Kohlendioxid während der Reaktion kontinuierlich in den Reaktor zudosiert werden.

In einer sechsten Ausführungsform betrifft die Erfindung ein Verfahren gemäß der fünften Ausführungsform, dadurch gekennzeichnet, dass das Verfahren in Gegenwart mindestens eines DMC-Katalysators durchgeführt wird und wobei in Schritt (γ) zusätzlich DMC-Katalysator kontinuierlich in den Reaktor dosiert wird und das resultierende Reaktionsgemisch kontinuierlich aus dem Reaktor entfernt wird.

In einer siebten Ausführungsform betrifft die Erfindung ein Verfahren gemäß der sechsten Ausführungsform, wobei

(δ) das in Schritt (γ) kontinuierlich entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

In einer achten Ausführungsform betrifft die Erfindung ein Verfahren gemäß einer der Ausführungsformen 4 bis 7, wobei in Schritt (a) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid eingesetzt wird.

In einer neunten Ausführungsform betrifft die Erfindung ein Verfahren gemäß einer der Ausführungsformen 1 bis 8, wobei zu einem beliebigen Zeitpunkt Komponente K zugegeben wird, wobei Komponente K ausgewählt ist aus mindestens einer Verbindung aus der Gruppe bestehend aus

Phosphorsäure,
Mono- und Dialkylester der Phosphorsäure,
Mono- und Diarylester der Phosphorsäure,
Mono- und Dialkarylester der Phosphorsäure,
(NH4)2HPO4,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure,
Phosphinsäure.

In einer zehnten Ausführungsform betrifft die Erfindung ein Verfahren gemäß der neunten Ausführungsform,

wobei Komponente K ausgewählt ist aus mindestens einer Verbindung aus der Gruppe bestehend aus Phosphorsäure, Phosphonsäure und Phosphinsäure.

In einer elften Ausführungsform betrifft die Erfindung ein Verfahren gemäß einer der Ausführungsformen 1 bis 10, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

In einer zwölften Ausführungsform betrifft die Erfindung ein Verfahren gemäß einer der Ausführungsformen 7 bis 11, wobei in Schritt (δ) das in Schritt (γ) erhaltene Reaktionsgemisch kontinuierlich in einen Nachreaktor überführt wird, wobei der Nachreaktor ein Rohrreaktor ist.

In einer dreizehnten Ausführungsform betrifft die Erfindung ein Verfahren gemäß einer der Ausführungsformen 7 bis 12, wobei in Schritt (δ) das in Schritt (γ) erhaltene Reaktionsgemisch kontinuierlich in einen Nachreaktor überführt wird, wobei im Wege der Nachreaktion der Gehalt an freiem Alkylenoxid auf weniger als 0,5 g/l reduziert wird.

**Beispiele:**

Die Hydroxylzahl (OH-Zahl) wurde gemäß der Vorschrift der DIN 53240 bestimmt. Die Angabe der Einheit in "mg KOH/g" bezieht sich auf mg[KOH]/g[Polyethercarbonatpolyol].
Die Viskosität wurde mittels Rotationsviskosimeter (Physica MCR 51, Hersteller: Anton Paar) gemäß der Vorschrift der DIN 53018 ermittelt.

Die Ermittlung der Reinheit des eingesetzten Kohlendioxids erfolgte gemäß der von der EUROPEAN INDUSTRIAL GASES ASSOCIATION AISBL verfassten Methode "EIGA IGC Doc 70/08/E" (Carbon Dioxide Source Qualification Quality Standards And Verification) und der dort in "Appendix D" angegebenen Analysenmethoden in Bezug auf die einzelnen Komponenten.

Der Anteil an eingebautem $CO_2$ im resultierenden Polyethercarbonatpolyol ("eingebautes $CO_2$") sowie das Verhältnis von Propylencarbonat (cyclisches Carbonat) zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) Resonanz bei 4,5 ppm, lineares Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(VIII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8) - F(4{,}5)] * 102}{N} * 100\% \qquad \text{(IX)}$$

wobei sich der Wert für N ("Nenner" N) nach Formel (X) berechnet:

$$N = [F(5,1-4,8) - F(4,5)]*102 + F(4,5)*102 + F(2,4)*58 + 0,33*F(1,2-1,0)*58 + 0,25*F(1,6-1,52)*146 \quad (X)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Gewichtsanteil (in Gew.-%) an cyclischem Carbonat (CC') in der Reaktionsmischung wurde nach Formel (XI) berechnet,

$$CC' = \frac{F(4,5)*102}{N}*100\% \quad (XI)$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.

Die Menge an gebildeten cyclischen Carbonat wird über die Bilanzierung der in der Reaktionsmischung vorhandenen Gesamtmenge an cyclischem Propylencarbonat und der als Vorlage eingesetzten Menge an Propylencarbonat bestimmt.

Eingesetzte Rohstoffe:

DMC-Katalysator: Ein getrockneter und gemahlener DMC-Katalysator (Doppelmetallcyanid-Katalysator), hergestellt gemäß Beispiel 6 von WO 2001/80994-A1
Glycerin: Fa. Aug. Hedinger GmbH & Co. KG
Propylenglykol: Fa. Aug. Hedinger GmbH & Co. KG
Die Reinheit der eingesetzten $CO_2$-Qualitäten war wie folgt:

$CO_2$-Reinheit "2.5": 99,5000 - 99,8999 Vol.-% $CO_2$

$CO_2$-Reinheit "3.0": 99,9000 - 99,9449 Vol.-% $CO_2$

$CO_2$- Reinheit "4.5": 99,9950 - 99,9974 Vol.-% $CO_2$

$CO_2$- Reinheit "4.8": 99,9975 - 99,9984 Vol.-% $CO_2$

Herstellung von Polvethercarbonatpolvolen:

Beispiel 1:

In einen mit Stickstoff gespülten 60L Druckreaktor mit Gasdosierungseinrichtung wurde eine Suspension aus 14,9 g getrocknetem DMC-Katalysator sowie 4700 g cyclischem Propylencarbonat (cPC) vorgelegt. Der Reaktor wurde auf ca. 100 °C aufgeheizt und 1 h bei Unterdruck (100 mbar) mit $N_2$ inertisiert. Anschließend wurde mit $CO_2$ der Reinheit "3.0" (99,9000 - 99,9449 Vol.-% $CO_2$) auf einen Druck von 74 bar beaufschlagt. In den Reaktor wurden bei 110 °C unter Rühren (316 U/min) 500 g Propylenoxid (PO) schnell eindosiert. Das Anspringen der Reaktion machte sich durch eine Temperaturspitze ("Hotspot") und eine Druckabnahme bemerkbar. Nach der erfolgten Aktivierung wurde das restliche Propylenoxid (33,58 kg) mit 8,2 kg/h und 1,1 kg einer Mischung der Starter Glycerin (versetzt mit 180 ppm 85%-iger $H_3PO_4$) und Monopropylenglykol (Gewichtsverhältnis 85/15) mit 0,29 kg/h gleichzeitig in den Reaktor eindosiert. Gleichzeitig wurde die Reaktionstemperatur auf 105 °C gesenkt. Der Fortschritt der Reaktion wurde am $CO_2$-Verbrauch beo-

bachtet, wobei durch kontinuierliche geregelte Nachdosierung der Druck im Reaktor bei 74 bar gehalten wurde. Nach beendeter PO-Zugabe wurde mit 316 U/min gerührt, bis kein weiterer Abfall des Drucks mehr festgestellt wurde. Abschließend wurden leichtflüchtige Bestandteile durch Dünnschichtverdampfung (Temperatur = 160°C, Druck = 0,3 mbar, Durchsatz = 6 kg/h) abgetrennt.

| Analytische Daten: | |
|---|---|
| OH-Zahl: | 48,0 mg KOH/g |
| Viskosität 25°C: | 26400 mPas |
| Eingebautes $CO_2$: | 21,31 Gew.-% |
| Selektivität (cyclisches/lineares Carbonat): | 0,198 |

Beispiel 2 (Vergleich):

Beispiel 2 (Vergleich) wurde analog zu Beispiel 1 durchgeführt; allerdings wurde $CO_2$ der Reinheit 4.5" (99,9950 - 99,9974 Vol.-% $CO_2$) anstelle von $CO_2$ der Reinheit "3.0" eingesetzt.

| Analytische Daten: | |
|---|---|
| OH-Zahl: | 48,2 mg KOH/g |
| Viskosität 25°C: | 22800 mPas |
| Eingebautes $CO_2$: | 20,84 Gew.-% |
| Selektivität (cyclisches / lineares Carbonat): | 0,227 |

Beispiel 3:

In einen mit Stickstoff gespülten 1L Druckreaktor mit Gasdosierungseinrichtung wurden 136 mg getrockneter DMC-Katalysator sowie 121 g cyclisches Propylencarbonat (cPC) vorgelegt. Der Reaktor wurde auf ca. 130 °C aufgeheizt und 1 h bei Unterdruck (75 mbar) mit $N_2$ inertisiert. In den Reaktor wurden unter Rühren (1200 U/min) 10 g Propylenoxid (PO) schnell eindosiert. Das Anspringen der Reaktion machte sich durch eine Temperaturspitze ("Hotspot") und eine Druckabnahme bemerkbar. Anschließend wurde mit 50 bar $CO_2$ der Reinheit "3.0" (99,9000 - 99,9449 Vol.-% $CO_2$) beaufschlagt und erneut 10 g PO zugegeben. Nach erneuter Temperaturspitze wurden 482 g PO mit 2,2 g/min und 18 g Glycerin (versetzt mit 25 mg $H_3PO_4$) mit 0,1 g/min gleichzeitig in den Reaktor eindosiert. Dabei wurde die Reaktionstemperatur auf 105 °C gesenkt. Der Fortschritt der Reaktion wurde am $CO_2$-Verbrauch beobachtet, wobei durch kontinuierliche geregelte Nachdosierung der Druck im Reaktor bei 50 bar gehalten wurde. Nach beendeter PO-Zugabe wurde mit 1200 U/min gerührt, bis kein weiterer Abfall des Drucks mehr festgestellt wurde. Abschließend wurden leichtflüchtige Bestandteile durch Dünnschichtverdampfung abgetrennt.

| Analytische Daten: | |
|---|---|
| OH-Zahl: | 57,3 mg KOH/g |
| Eingebautes $CO_2$: | 17,72 Gew.-% |
| Selektivität (cyclisches /lineares Carbonat): | 0,09 |

Beispiel 4 (Vergleich):

Beispiel 4 (Vergleich) wurde analog zu Beispiel 3 durchgeführt; allerdings wurde $CO_2$ der Reinheit "4.8" (99,9975 - 99,9984 Vol.-% $CO_2$) anstelle von $CO_2$ der Reinheit "3.0" eingesetzt.

| Analytische Daten: | |
|---|---|
| OH-Zahl: | 58,7 mg KOH/g |
| Eingebautes $CO_2$: | 17,80 Gew.-% |
| Selektivität (cyclisches /lineares Carbonat): | 0,13 |

In Tabelle 1 sind die Ergebnisse der Beispiele 1 bis 4 zur Polyethercarbonatpolyol-Herstellung zusammengefasst, wobei folgende Ergebnisse angegeben sind:

- OH-Zahl: die Hydroxylzahl der erhaltenen Polyethercarbonatpolyole,
- Viskosität (25°C): die Viskosität der erhaltenen Polyethercarbonatpolyole bei 25°C
- Eingebautes $CO_2$: der Gehalt an in die Polyethercarbonatpolyole eingebautem Kohlendioxid ($CO_2$),
- Selektivität [cyclisches / lineares Carbonat]: Verhältnis von Propylencarbonat (cyclisches Carbonat) zu Polyethercarbonatpolyol (lineares Carbonat) im erhaltenen Reaktionsprodukt der Copolymerisation

Tabelle 1: Ergebnisse der Polyethercarbonatpolyol-Herstellung

| Beispiel | $CO_2$-Qualität | OH-Zahl [mg KOH/g] | Viskosität 25°C [mPas] | Eingebautes $CO_2$ [Gew.-%] | Selektivität [cyclisches / lineares Carbonat] |
|---|---|---|---|---|---|
| 1 | 3.0 | 48,0 | 26400 | 21,31 | 0,198 |
| 2*) | 4.5 | 48,2 | 22800 | 20,84 | 0,227 |
| 3 | 3.0 | 57,3 | nicht bestimmt | 17,72 | 0,09 |
| 4*) | 4.8 | 58,7 | nicht bestimmt | 17,80 | 0,13 |
| *) Vergleichsbeispiel | | | | | |

Ein Vergleich des erfindungsgemäßen Beispiels 1 mit Beispiel 2 (Vergleich) sowie des erfindungsgemäßen Beispiels 3 mit Beispiel 4 (Vergleich) zeigt, dass jeweils deutlich bessere Selektivitäten (niedrigere Verhältnisse cyclisches / lineares Carbonat) erhalten werden, wenn das eingesetzte $CO_2$ eine Reinheit von 99,9000 bis 99,9449 Vol.-% aufweist.

Beispiel 5:

In einen kontinuierlich betriebenen 60 L Druckreaktor mit Gasdosierungseinrichtung und Produktaustragsrohr wurden 32,9 L eines Polyethercarbonatpolyols (OH-Funktionalität = 2,8; OH-Zahl = 56 mg KOH/g; $CO_2$-Gehalt = 20 Gew.-%) enthaltend 200 ppm DMC-Katalysator vorgelegt.

Bei einer Temperatur von 108°C und einem Gesamtdruck von 65 bar (absolut) wurden unter Rühren (9 Hz) folgende Komponenten mit den angegebenen Dosierraten dosiert:

- Propylenoxid mit 7,0 kg/h
- Kohlendioxid der Reinheit "2.5" (99,5000 - 99,8999 Vol.-% $CO_2$) mit 2,3 kg/h
- Mischung aus Glycerin/Propylenglykol (85 Gew.-% / 15 Gew.-%) enthaltend 0,69 Gew.-% DMC-Katalysator (nicht aktiviert) und 146 ppm (bezogen auf die Mischung aus Glycerin, Propylenglykol und DMC-Katalysator) $H_3PO_4$ (eingesetzt in Form einer 85%-igen wässrigen Lösung) mit 0,27 kg/h.

Die Reaktionsmischung wurde über das Produktaustragsrohr kontinuierlich aus dem Druckreaktor entnommen, so dass das Reaktionsvolumen (32,9 L) konstant gehalten wurde, wobei die mittlere Verweilzeit des Reaktionsgemischs im Reaktor 200 min betrug.

Zur Vervollständigung der Reaktion wurde das entnommene Reaktionsgemisch in einen auf 120°C temperierten Nachreaktor (Rohrreaktor mit einem Reaktionsvolumen von 2,0 L) überführt. Die mittlere Verweilzeit des Reaktionsgemischs im Nachreaktor betrug 12 min. Das Produkt wurde anschließend auf Atmosphärendruck entspannt und dann mit 500 ppm Antioxidans Irganox® 1076 versetzt.

Anschließend wurde das Produkt mittels eines Wärmetauschers auf eine Temperatur von 120°C gebracht und unmittelbar darauf in einen 332 1 Kessel überführt und für eine Verweilzeit von 4 Stunden bei der Temperatur von 120°C gehalten.

Nach Abschluss der Verweilzeit wurde das Produkt mit 40 ppm Phosphorsäure (Komponente K) versetzt.

Abschließend wurde das Produkt zur Abtrennung des cyclischen Propylencarbonats einer zweistufigen thermischen Aufarbeitung, nämlich in einer ersten Stufe mittels eines Fallfilmverdampfers gefolgt in einer zweiten Stufe von einer im Stickstoffgegenstrom betriebenen Strippkolonne unterworfen.

Der Fallfilmverdampfer wurde dabei bei einer Temperatur von 160°C und einem Druck von 10 mbar (absolut) betrieben. Der verwendete Fallfilmverdampfer bestand aus Glas mit einer Austauschfläche von 0,5 $m^2$. Der Apparat besaß ein von außen beheiztes Rohr mit einem Durchmesser von 115 mm und ca. 1500 mm Länge.

Die Stickstoff-Strippkolonne wurde bei einer Temperatur von 160°C, einem Druck von 80 mbar (absolut) und einer Stickstoff-Durchflussmenge von 0,6 kg $N_2$ / kg Produkt betrieben. Bei der verwendeten Strippkolonne handelte es sich um eine DN80 Glaskolonne mit 8 m Füllhöhe an Füllkörpern (Raschig Super-Ringe #0,3).

Der Gehalt an cyclischen Carbonat nach thermischer Belastung des Polyethercarbonatpolyols wurde anhand der beiden folgenden für die Praxis relevanten Verfahren beurteilt: Einerseits der Gehalt an cyclischen Carbonat nach einer zweistufigen thermischen Aufarbeitung und andererseits der Gehalt an cyclischen Carbonat nach Lagerung (66 h bei 100°C) des aufgearbeiteten Polyethercarbonatpolyols.

Von dem erhaltenen Polyethercarbonatpolyol wurden die OH-Zahl, die Viskosität, der Gehalt an eingebautem Kohlendioxid und der Gehalt an cyclischem Carbonat ("cPC", Tabelle 2). bestimmt.

Zur Ermittlung der thermischen Lagerstabilität des Polyethercarbonatpolyols (nach der zweistufigen thermischen Aufarbeitung) wurde dieses 66 Stunden bei 100°C gelagert. Anschließend wurde der Gehalt an cyclischem Carbonat in dem so gelagerten Polyethercarbonatpolyol gemessen ("cPC@66h/100°C", Tabelle 2).

Beispiel 6:

Beispiel 6 wurde analog zu Beispiel 5 durchgeführt; allerdings wurde $CO_2$ der Reinheit "3.0" (99,9000 - 99,9449 Vol.-% $CO_2$) anstelle von $CO_2$ der Reinheit "2.5" eingesetzt.

Beispiel 7 (Vergleich):

Beispiel 7 (Vergleich) wurde analog zu Beispiel 5 durchgeführt; allerdings wurde $CO_2$ der Reinheit "4.5" (99,9950 - 99,9974 Vol.-% $CO_2$) anstelle von $CO_2$ der Reinheit "2.5" eingesetzt.

In Tabelle 2 sind die Ergebnisse der Beispiele 5 bis 7 zur Polyethercarbonatpolyol-Herstellung zusammengefasst, wobei folgende Ergebnisse angegeben sind:

- OH-Zahl: OH-Zahl der erhaltenen Polyethercarbonatpolyole,
- Viskosität (25°C):Viskosität der erhaltenen Polyethercarbonatpolyole bei 25°C
- Eingebautes $CO_2$: Gehalt an in die Polyethercarbonatpolyole eingebautem Kohlendioxid ($CO_2$),
- cPC: Gehalt an cyclischem Propylencarbonat nach der zweistufigen thermischen Aufarbeitung sowie
- cPC @66h/100°C: Gehalt an cyclischem Propylencarbonat nach 66 Stunden Lagerung bei 100°C.

Tabelle 2: Ergebnisse der Polyethercarbonatpolyol-Herstellung

| Beispiel | $CO_2$-Qualität | OH-Zahl [mg KOH/g] | Viskosität 25°C [mPas] | Eingebautes $CO_2$ [Gew.-%] | cPC [ppm] | cPC@66h/100°C [ppm] |
|---|---|---|---|---|---|---|
| 5 | 2.5 | 57.5 | 14100 | 19.2 | 20 | 47 |
| 6 | 3.0 | 57.6 | 14850 | 19.4 | 22 | 37 |
| 7*) | 4.5 | 57.9 | 14500 | 19.2 | 38 | 184 |
| *) Vergleichsbeispiel | | | | | | |

Ein Vergleich der erfindungsgemäßen Beispiele 5 und 6 mit Beispiel 7 (Vergleich) zeigt, dass die Polyethercarbonatpolyole eine erhöhte Lagerstabilität aufweisen (geringerer Gehalt an cyclischem Carbonat nach thermischer Belastung), wenn das eingesetzte $CO_2$ eine Reinheit von 99,5000 - 99,8999 Vol.-% (Qualität 2.5) bzw. von 99,9000 bis 99,9449 Vol.-% (Qualität 3.0) besitzt. Besonders vorteilhaft erweist sich der Einsatz von $CO_2$ mit einer Reinheit von 99,9000 bis 99,9449 Vol.-% (Qualität 3.0) (Beispiel 6), da hier nach der zweistufigen thermischen Aufarbeitung ein in etwa vergleichbares Niveau an cPC-Gehalt wie bei Einsatz von $CO_2$ mit einer Reinheit von 99,5000 - 99,8999 Vol.-% (Qualität 2.5) erreicht wird, aber zusätzlich nach 66 h Lagerung bei 100°C ein sehr niedriger Gehalt an cyclischem Carbonat (cPC@66h/100°C) festgestellt wird.

## Patentansprüche

1. Verfahren zur Herstellung von Polyethercarbonatpolyolen aus H-funktioneller Startersubstanz, Alkylenoxid und Kohlendioxid in Gegenwart eines Doppelmetallcyanid (DMC)-Katalysators oder in Gegenwart eines Metallkomplex¬katalysators auf Basis der Metalle Zink und/oder Cobalt, wobei das eingesetzte Kohlendioxid eine Reinheit von 99,5000 bis 99,9449 Vol.-% aufweist.

2. Verfahren gemäß Anspruch 1, wobei das eingesetzte Kohlendioxid eine Reinheit von 99,9000 bis 99,9449 Vol.-%

aufweist.

3. Verfahren gemäß Anspruch 1 oder 2, welches in Gegenwart mindestens eines DMC-Katalysators durchgeführt wird.

4. Verfahren gemäß einem der Ansprüche 1 bis 3, **dadurch gekennzeichnet, dass** das Verfahren in Gegenwart mindestens eines DMC-Katalysators durchgeführt wird und dass

(α) H-funktionelle Startersubstanz und/oder ein Suspensionsmittel, das keine H-funktionellen Gruppen enthält, vorgelegt und gegebenenfalls Wasser und/oder andere leicht flüchtige Verbindungen durch erhöhte Temperatur und/oder reduziertem Druck entfernt werden, wobei der DMC-Katalysator der H-funktionellen Startersubstanz oder dem Suspensionsmittel vor oder nach der Trocknung zugesetzt wird,
(β) zu dem Gemisch aus Schritt (α) eine Teilmenge an Alkylenoxid bei Temperaturen von 90 bis 150°C zugegeben wird, und wobei dann die Zugabe des Alkylenoxids unterbrochen wird,
(γ) Alkylenoxid und Kohlendioxid und gegebenenfalls H-funktionelle Startersubstanz zu der aus Schritt (β) resultierenden Mischung zugesetzt werden,

wobei in wenigsten einem der Schritte (α) und (γ) H-funktionelle Startersubstanz eingesetzt wird.

5. Verfahren gemäß einem der Ansprüche 1 bis 4, **dadurch gekennzeichnet, dass**
(γ) H-funktionelle Startersubstanz(en), Alkylenoxid und Kohlendioxid während der Reaktion kontinuierlich in den Reaktor zudosiert werden.

6. Verfahren gemäß Anspruch 5 **dadurch gekennzeichnet, dass** das Verfahren in Gegenwart mindestens eines DMC-Katalysators durchgeführt wird und wobei in Schritt (γ) zusätzlich DMC-Katalysator kontinuierlich in den Reaktor dosiert wird und das resultierende Reaktionsgemisch kontinuierlich aus dem Reaktor entfernt wird.

7. Verfahren gemäß Anspruch 6, wobei
(δ) das in Schritt (γ) kontinuierlich entfernte Reaktionsgemisch mit einem Gehalt von 0,05 Gew.-% bis 10 Gew.-% Alkylenoxid in einen Nachreaktor überfuhrt wird, in dem im Wege einer Nachreaktion der Gehalt an freiem Alkylenoxid auf weniger als 0,05 Gew.-% im Reaktionsgemisch reduziert wird.

8. Verfahren gemäß einem der Ansprüche 4 bis 7, wobei in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid eingesetzt wird.

9. Verfahren gemäß einem der Ansprüche 1 bis 8, wobei zu einem beliebigen Zeitpunkt Komponente K zugegeben wird, wobei Komponente K ausgewählt ist aus mindestens einer Verbindung aus der Gruppe bestehend aus
Phosphorsäure,
Mono- und Dialkylester der Phosphorsäure,
Mono- und Diarylester der Phosphorsäure,
Mono- und Dialkarylester der Phosphorsäure,
(NH4)2HPO4,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure,
Phosphinsäure.

10. Verfahren gemäß Anspruch 9, wobei Komponente K ausgewählt ist aus mindestens einer Verbindung aus der Gruppe bestehend aus Phosphorsäure, Phosphonsäure und Phosphinsäure.

11. Verfahren gemäß einem der Ansprüche 1 bis 10, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

12. Verfahren gemäß einem der Ansprüche 7 bis 11, wobei in Schritt (δ) das in Schritt (γ) erhaltene Reaktionsgemisch kontinuierlich in einen Nachreaktor überführt wird, wobei der Nachreaktor ein Rohrreaktor ist.

13. Verfahren gemäß einem der Ansprüche 7 bis 12, wobei in Schritt (δ) das in Schritt (γ) erhaltene Reaktionsgemisch kontinuierlich in einen Nachreaktor überführt wird, wobei im Wege der Nachreaktion der Gehalt an freiem Alkylenoxid auf weniger als 0,5 g/l reduziert wird.

## Claims

1. Process for preparing polyether carbonate polyols from H-functional starter substance, alkylene oxide and carbon dioxide in the presence of a double metal cyanide (DMC) catalyst or in the presence of a metal complex catalyst based on the metals zinc and/or cobalt, wherein the carbon dioxide used has a purity of 99.5000% to 99.9449% by volume.

2. Process according to Claim 1, wherein the carbon dioxide used has a purity of 99.9000% to 99.9449% by volume.

3. Process according to Claim 1 or 2, which is conducted in the presence of at least one DMC catalyst.

4. Process according to any of Claims 1 to 3, **characterized in that** the process is conducted in the presence of at least one DMC catalyst, and **in that**

(α) H-functional starter substance and/or a suspension medium containing no H-functional groups is initially charged and any water and/or other volatile compounds are removed by elevated temperature and/or reduced pressure, with addition of the DMC catalyst to the H-functional starter substance or to the suspension medium before or after the drying,
(β) a portion of alkylene oxide is added to the mixture from step (a) at temperatures of 90 to 150°C, and wherein then the addition of the alkylene oxide is stopped,
(γ) alkylene oxide and carbon dioxide and optionally H-functional starter substance are added to the mixture resulting from step (β),

wherein H-functional starter substance is used at least in one of steps (α) and (γ).

5. Process according to any of Claims 1 to 4, **characterized in that**
(γ) H-functional starter substance(s), alkylene oxide and carbon dioxide are metered continuously into the reactor during the reaction.

6. Process according to Claim 5, **characterized in that** the process is conducted in the presence of at least one DMC catalyst and wherein, in step (γ), DMC catalyst is additionally metered continuously into the reactor and the resulting reaction mixture is removed continuously from the reactor.

7. Process according to Claim 6, wherein
(δ) the reaction mixture which is removed continuously in step (γ) and has a content of 0.05% by weight to 10% by weight of alkylene oxide is transferred into a postreactor in which the free alkylene oxide content is reduced to less than 0.05% by weight in the reaction mixture by way of postreaction.

8. Process according to any of Claims 4 to 7, wherein the suspension medium used in step (α) is at least one compound selected from the group consisting of 4-methyl-2-oxo-1,3-dioxolane, 1,3-dioxolan-2-one, acetone, methyl ethyl ketone, acetonitrile, nitromethane, dimethyl sulfoxide, sulfolane, dimethylformamide, dimethylacetamide, N-methylpyrrolidone, dioxane, diethyl ether, methyl tert-butyl ether, tetrahydrofuran, ethyl acetate, butyl acetate, pentane, n-hexane, benzene, toluene, xylene, ethylbenzene, chloroform, chlorobenzene, dichlorobenzene, carbon tetrachloride, ε-caprolactone, dihydrocoumarin, trimethylene carbonate, neopentyl glycol carbonate, 3,6-dimethyl-1,4-dioxane-2,5-dione, succinic anhydride, maleic anhydride and phthalic anhydride.

**9.** Process according to any of Claims 1 to 8, wherein component K is added at any time, wherein component K is selected from at least one compound from the group consisting of
phosphoric acid,
mono- and dialkyl esters of phosphoric acid,
mono- and diaryl esters of phosphoric acid,
mono- and dialkaryl esters of phosphoric acid, (NH4)2HPO4,
phosphonic acid,
monoalkyl esters of phosphonic acid,
monoaryl esters of phosphonic acid,
monoalkaryl esters of phosphonic acid,
phosphorous acid,
mono- and dialkyl esters of phosphorous acid,
mono- and diaryl esters of phosphorous acid,
mono- and dialkaryl esters of phosphorous acid,
phosphinic acid.

**10.** Process according to Claim 9, wherein component K is selected from at least one compound from the group consisting of phosphoric acid, phosphonic acid and phosphinic acid.

**11.** Process according to any of Claims 1 to 10, wherein the H-functional starter substance is selected from at least one of the group consisting of ethylene glycol, propylene glycol, propane-1,3-diol, butane-1,3-diol, butane-1,4-diol, pentane-1,5-diol, 2-methylpropane-1,3-diol, neopentyl glycol, hexane-1,6-diol, octane-1,8-diol, diethylene glycol, dipropylene glycol, glycerol, trimethylolpropane, pentaerythritol, sorbitol, polyether carbonate polyols having a molecular weight Mn in the range from 150 to 8000 g/mol with a functionality of 2 to 3, and polyether polyols having a molecular weight Mn in the range from 150 to 8000 g/mol with a functionality of 2 to 3.

**12.** Process according to any of Claims 7 to 11, wherein in step (δ) the reaction mixture obtained in step (γ) is transferred continuously into a postreactor, wherein the postreactor is a tubular reactor.

**13.** Process according to any of Claims 7 to 12, wherein in step (δ) the reaction mixture obtained in step (γ) is transferred continuously into a postreactor, wherein the free alkylene oxide content is reduced to less than 0.5 g/l by way of postreaction.

**Revendications**

**1.** Procédé de fabrication de polyéther-carbonate-polyols à partir d'une substance de départ à fonction H, d'un oxyde d'alkylène et de dioxyde de carbone en présence d'un catalyseur de cyanure de deux métaux (DMC) ou en présence d'un catalyseur de complexe métallique à base des métaux zinc et/ou cobalt, le dioxyde de carbone utilisé présentant une pureté de 99,5000 à 99,9449 % en volume.

**2.** Procédé selon la revendication 1, dans lequel le dioxyde de carbone utilisé présente une pureté de 99,9000 à 99,9449 % en volume.

**3.** Procédé selon la revendication 1 ou 2, qui est réalisé en présence d'au moins un catalyseur DMC.

**4.** Procédé selon l'une quelconque des revendications 1 à 3, **caractérisé en ce que** le procédé est réalisé en présence d'au moins un catalyseur DMC, et **en ce que**

(α) une substance de départ à fonction H et/ou un agent de suspension qui ne contient pas de groupes à fonction H sont chargés initialement, et de l'eau et/ou d'autres composés facilement volatils sont éventuellement éliminés par une température élevée et/ou une pression réduite, le catalyseur DMC étant ajouté à la substance de départ à fonction H ou à l'agent de suspension avant ou après le séchage,
(β) une quantité partielle d'oxyde d'alkylène est ajoutée au mélange de l'étape (α) à des températures de 90 à 150 °C, et l'ajout de l'oxyde d'alkylène est ensuite interrompu,

(γ) de l'oxyde d'alkylène et du dioxyde de carbone et éventuellement une substance de départ à fonction H sont ajoutés au mélange résultant de l'étape (β),
la substance de départ à fonction H étant utilisée dans au moins une des étapes (α) et (γ).

**5.** Procédé selon l'une quelconque des revendications 1 à 4, **caractérisé en ce que**
(γ) une ou plusieurs substances de départ à fonction H, un oxyde d'alkylène et du dioxyde de carbone sont ajoutés en continu dans le réacteur pendant la réaction.

**6.** Procédé selon la revendication 5, **caractérisé en ce que** le procédé est réalisé en présence d'au moins un catalyseur DMC, et du catalyseur DMC étant en outre ajouté en continu dans le réacteur à l'étape (γ), et le mélange réactionnel résultant étant déchargé en continu du réacteur.

**7.** Procédé selon la revendication 6, dans lequel
(δ) le mélange réactionnel déchargé en continu à l'étape (γ) ayant une teneur de 0,05 % en poids à 10 % en poids d'oxyde d'alkylène est transféré dans un réacteur secondaire, dans lequel la teneur en oxyde d'alkylène libre est réduite à moins de 0,05 % en poids dans le mélange réactionnel au cours d'une réaction secondaire.

**8.** Procédé selon l'une quelconque des revendications 4 à 7, dans lequel, à l'étape (α), au moins un composé choisi dans le groupe constitué par le 4-méthyl-2-oxo-1,3-dioxolane, la 1,3-dioxolan-2-one, l'acétone, la méthyléthylcétone, l'acétonitrile, le nitrométhane, le diméthylsulfoxyde, le sulfolane, le diméthylformamide, le diméthylacétamide, la N-méthylpyrrolidone, le dioxane, l'éther diéthylique, l'éther de méthyle et de tert-butyle, le tétrahydrofurane, l'ester éthylique de l'acide acétique, l'ester butylique de l'acide acétique, le pentane, le n-hexane, le benzène, le toluène, le xylène, l'éthylbenzène, le chloroforme, le chlorobenzène, le dichlorobenzène, le tétrachlorure de carbone, l'ε-caprolactone, la dihydrocoumarine, le carbonate de triméthylène, le carbonate de néopentylglycol, la 3,6-diméthyl-1,4-dioxane-2,5-dione, l'anhydride de l'acide succinique, l'anhydride de l'acide maléique et l'anhydride de l'acide phtalique est utilisé en tant qu'agent de suspension.

**9.** Procédé selon l'une quelconque des revendications 1 à 8, dans lequel un composant K est ajouté à un moment quelconque, le composant K étant choisi parmi au moins un composé du groupe constitué par :

l'acide phosphorique,
les esters mono- et dialkyliques de l'acide phosphorique,
les esters mono- et diaryliques de l'acide phosphorique,
les esters mono- et dialkaryliques de l'acide phosphorique,
$(NH_4)_2HPO_4$,
l'acide phosphonique,
les esters monoalkyliques de l'acide phosphonique,
les esters monoaryliques de l'acide phosphonique,
les esters monoalkaryliques de l'acide phosphonique, l'acide phosphoreux,
les esters mono- et dialkyliques de l'acide phosphoreux,
les esters mono- et diaryliques de l'acide phosphoreux,
les esters mono- et dialkaryliques de l'acide phosphoreux,
l'acide phosphinique.

**10.** Procédé selon la revendication 9, dans lequel le composant K est choisi parmi au moins un composé du groupe constitué par l'acide phosphorique, l'acide phosphonique et l'acide phosphinique.

**11.** Procédé selon l'une quelconque des revendications 1 à 10, dans lequel la substance de départ à fonction H est choisie parmi au moins une du groupe constitué par l'éthylène glycol, le propylène glycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylène glycol, le dipropylène glycol, la glycérine, le triméthylolpropane, la pentaérythrite, le sorbitol, les polyéther-carbonate-polyols ayant un poids moléculaire Mn dans la plage allant de 150 à 8 000 g/mol à une fonctionnalité de 2 à 3, et les polyéther-polyols ayant un poids moléculaire Mn dans la plage allant de 150 à 8 000 g/mol à une fonctionnalité de 2 à 3.

**12.** Procédé selon l'une quelconque des revendications 7 à 11, dans lequel, à l'étape (δ), le mélange réactionnel obtenu à l'étape (γ) est transféré en continu dans un réacteur secondaire, le réacteur secondaire étant un réacteur tubulaire.

**13.** Procédé selon l'une quelconque des revendications 7 à 12, dans lequel, à l'étape (δ), le mélange réactionnel obtenu à l'étape (γ) est transféré en continu dans un réacteur secondaire, la teneur en oxyde d'alkylène libre étant réduite à moins de 0,5 g/l au cours de la réaction secondaire.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008058913 A
- EP 2530101 A
- US 4145525 A
- US 2003134740 A1
- WO 2015059068 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- EP 1359177 A
- WO 200180994 A1


### In der Beschreibung aufgeführte Nicht-Patentliteratur


- **B. INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931